(19) Europäisches Patentamt
European Patent Office
Office européen des brevets

(11) EP 0 551 086 B1

(12) EUROPEAN PATENT SPECIFICATION

(45) Date of publication and mention of the grant of the patent:
**28.04.1999 Bulletin 1999/17**

(51) Int Cl.$^6$: **G06K 9/40**, A61B 5/117

(21) Application number: **93100059.0**

(22) Date of filing: **05.01.1993**

(54) **Method of smoothing a ridge direction pattern and equipment used therefor**

Verfahren zum Glätten von Rippenrichtungsmustern und dazu verwendete Einrichtung

Procédé de lissage d'images de directions de crêtes et dispositif pour la mise en oeuvre

(84) Designated Contracting States:
**DE FR GB**

(30) Priority: **07.01.1992 JP 18589/92**

(43) Date of publication of application:
**14.07.1993 Bulletin 1993/28**

(73) Proprietor: **NEC CORPORATION**
**Tokyo (JP)**

(72) Inventor: **Kamei, Toshio c/o Nec Corporation**
**Minato-ku, Tokyo (JP)**

(74) Representative: **VOSSIUS & PARTNER**
**Postfach 86 07 67**
**81634 München (DE)**

(56) References cited:
- **SECOND INT. CONF. ON COMPUTER VISION, DEC. 5-8, 1988, TAMPA, FLORIDA, US, IEEE COMP. SOC. PRESS pages 568 - 577 XP000079932 S. W. ZUCKER ET AL. 'The Organization of Curve Detection: Coarse tangent fields and fine spline coverings'**
- **FIRST IEE INT. CONF. ON ARTIFICIAL NEURAL NETWORKS, LONDON, OCT. 16-18, 1989, IEE, LONDON, GB. pages 76 - 80 ZHONGQUAM WU 'Optical Flow Estimation by Using the Artificial Neural Network under Multi-Layers'**
- **SYSTEMS & COMPUTERS IN JAPAN. vol. 17, no. 6 , 1986 , NEW YORK US pages 31 - 39 O. NAKAMURA ET AL. 'A Restoration Algorithm of Fingerprint Images'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention relates to a method of recognizing fingerprints, and more particularly to a method of smoothing a ridge direction pattern when the flow of the ridge lines is used for precise interpretation of fingerprints.

A method of smoothing a ridge direction pattern has been disclosed, for example, on "Fingerprint Pattern Classification" by Masahiro Kawagoe et al in Pattern Recognition Vol.17, No.3, pp.295-303,1984, on "A Restoration Algorithm of Fingerprint Images" by Osamu Nakamura et al in Treatise of Japanese Electronics and Communication Vol. J68, No. 5, pp1133-1140, 1985, and on "Automated Fingerprint Identification by Minutia-Network Feature" by Ko Asai et al in Treatise of Japanese Electronics, Information and Communication Vol. Vol.J72-D-II, pp724-732, 1989.

In these heretofore known systems, a fingerprint is input, for example, as a 512×512 binary image(dot matrix) and converted into an array of direction patterns composed of 32×32 subregions, each corresponding to a 16×16 pixel area.

The direction in each subregion is quantized in eight different levels, that is, 0, $\pi/8$, $2\pi/8$, $3\pi/8$, $4\pi/8$, $5\pi/8$, $6\pi/8$, $7\pi/8$ and is labeled by d from d=1 to d=8, d=1 corresponding to 0 level and d=7 corresponding to $7\pi/8$ level. Besides to these eight levels, d=0 is labeled to a subregion where no ridge line is contained or where the direction pattern is not defined.

In the conversion into these nine labels, a quantized direction having the highest probability in a subregion is labeled to the subregion, and its probability is called an initial probability of the initial direction.

Then, the probabilities of the directions of all the subregions are repeatedly innovated by probabilistic relaxation process in which a renovated probability is expressed by

$$P_j^{k+1}(d)=\frac{P_j^k(d)\{1+q_j^k(d)\}}{\Sigma P_j^k(d)\{1+q_j^k(d)\}} \qquad (1)$$

where

$$q_j^k(d)=\sum_{j'=1}^{a} W_{jj'}\bullet\{\sum_{d'=0}^{8}\gamma_{jj'}(d,d')P_{j'}^k(d)\}$$

| | |
|---|---|
| $P_j^k(d)$ | is the probability of direction d at position j in the kth iteration, |
| j, (j') | is the subregions position, |
| a | is the extent of the subregions having influence on a subregion concerned, |
| $W_{jj'}$ | is a weight of influence from a subregion at point j' to a subregion at point j, |
| $\gamma_{jj'}(d,d')$ | is the compatibility coefficient, for example =1 when d is parallel to d', and =-1 when d is perpendicular to d'. |

At each iteration of the probabilistic relaxation process, the direction having the highest probability in a subregion may change and the label of the subregion is changed.

After a certain number of iterations of the process, the label determined by the final iteration is taken as a smoothed label of the subregion.

Although the initial probability of a label for each subregion is determined at the initial conversion of the fingerprint, the label of a subregion can be changed at each iteration of the relaxation process without a constraint from the initial probability. Thus, there is no guarantee of convergence of a direction of a subregion, and an iteration of the step does not necessarily improve the smoothness of the ridge line pattern. Therefore, the operator must decide the termination of iteration by trial and error, observing the results on the way, and it is difficult to obtain a reliable ridge line pattern by this relaxation process.

And in this relaxation process, a label of low probability(low confidence of estimation) is treated equally as a label of high probability(high confidence of estimation). As a result, a label having a high initial probability can be changed to a wrong direction by an influence from a label having a low probability.

Steven W. Zucker et al. proposed a new paradigm for curve detection entitled "The Organization of Curve Detection" on a paper presented to the "Second International Conference on Computer Vision" held on December 5-8, 1988. In the paper, a local ridge line of a fingerprint, for example, is represented (labelled) by a discrete tangent field, i.e., an estimated representation of quantized tangents and curvatures at each possible trace point. For smoothing the direction labels, the probabilistic relaxation process is used, and the final labelling is selected such that it minimized a function of a compatibility.

In the Zucker's paradigm, however, the direct effect of the initial probability on the smoothing of the ridge line pattern is extinguished after the first iteration of the probabilistic relaxation process.

Therefore, an object of the present invention is to provide a process of smoothing in which an iteration of the process always improves the result of smoothing,

Another object of this invention is to provide a process of smoothing in which the operator is informed of the proper termination of the iteration.

And still another object of this invention is to provide a process of smoothing in which a label having a higher initial probability is less changed than that having a lower initial probability.

In order to achieve these objects, a discrepancy evaluation function $E_1$ and a dispersion evaluation function $E_2$ are introduced in this invention.

A direction variable which is represented by θ(m,n)(where m, n indicate the position of the subregion) is assigned to each subregion, and all the direction variables of all the subregions compose the variables of these functions. A contribution from a subregion to the discrepancy evaluation function is defined as a sum of the product of the direction difference of the direction variable from the initial direction of the subregion and the reliability of the initial direction.

Thus $E_1$ is represented by

$$E_1=\sum_m\sum_n R(m,n)\delta\{\theta(m,n),\ \vartheta(m,n)\}\cdots(2)$$

where ϑ(m,n) is the initial direction of a subregion at mth row and nth column, R(m,n) is the probability of the initial direction, θ(m,n) is the direction variable of the subregion, and δ represents the direction difference defined in a later paragraph.

$$\sum_m\sum_n$$

means a summation for all subregions.

The initial value of the direction variable θ(m, n) may be arbitrary. But for the sake of quick convergence of the direction variables, usually the initial direction ϑ(m, n) is assigned as the initial value of the direction variable θ(m, n). In the following descriptions of this specification, it is assumed that the initial value of a direction variable θ(m, n) is the initial direction ϑ(m, n).

A contribution from a subregion to the dispersion evaluation function $E_2$ is defined as a sum of the products of the direction difference from neighboring subregions and the weight of influence of the neighboring subregions. When the weight of the four neighboring subregions is 1(unity) and the weight of all the other subregions is 0(zero), $E_2$ is represented by

$$E_2=\sum_m\sum_n[\delta\{\theta(m,n),\theta(m+1,n)\}+\delta\{\theta(m,n),\theta(m,n+1)\}+\delta\{\theta(m,n),\theta(m-1,n)\}+\delta\{\theta(m,n),\theta(m,n-1)\}]\quad\cdots(3)$$

And an energy function E is defined by $E=E_1+\lambda E_2\cdots(4)$, where λ is a coefficient to be determined by design.

At one extremity, when λ is sufficiently smaller than unity, E becomes near minimum, when $E_1$ is minimum (=0) with the direction variable in each subregion being equal to the initial direction. And at another extremity, when λ is sufficiently larger than unity, E becomes near minimum when $E_2$ is minimum(=0) with all the direction variables of all the subregions being the same value. Between these two extremities, there is a range of the values of λ which gives an adequate ridge direction pattern smoothing. This range can be detected experimentally by trial and error method. In experiments tried by the inventor on a fingerprint image wherein a pixel is expressed by 8 bits of binary digits (256 graduations), λ=3. 3 gave a good result.

Thus, according to a first feature of this invention, the smoothed direction pattern of ridge lines is represented by a set of direction variables which makes the energy function E to a minimum value and comprises a step of extracting the initial pattern, a step of repeating renovation of direction variables and a step of calculating the value of the energy function for the renovated direction variables and judging the necessity of further iteration.

According to a second feature of this invention, the direction difference of two directions $\delta(\theta_2,\theta_1)$ is defined as a square of magnitude of a vector representing a difference vector between two unit vectors having directions $\theta_2$

and $\theta_1$ respectively.

According to a third feature of this invention, a new direction variable of a subregion is so determined as to satisfy equations

$\partial E/\partial\theta(m,n)=0$, and $\partial^2 E/\theta(m,n)^2>0$ •••(5), and then another new direction variable of another subregion is determined in a similar way.

Further objects, features, and advantages of this invention will become apparent from a consideration of the following description, the appended claims, and the accompanying drawings in which the same numerals indicate the same or the corresponding parts.

Fig.1 shows a block diagram of an embodiment of this invention;
Fig.2 shows a flow diagram of an embodiment of this invention;
Fig.3 shows an example of an initial ridge direction pattern of an embodiment of this invention;
Fig. 4 shows a ridge direction pattern smoothed from Fig.3;
Figs. 5 shows an effect of this invention;
Fig.6 illustrates a definition of a direction difference; and
Fig.7 shows a process of revising direction variables.

Referring to Fig.1, an image memory 11 stores a fingerprint picture. This picture is input to the image memory 11 by a conventional image input device, such as an image scanner. Ridge direction pattern extraction means 12 selects a portion of the content of the image memory 11, for example, 512×512 image data and converts the selected image data into an array of direction patterns of, for example, 32×32 subregions. In this conversion, the probability of each direction of a subregion is also determined.

The direction patterns are stored in an initial pattern memory 13, and the probability corresponding to a direction pattern of a subregion is stored in a probability pattern memory 14. A variable direction memory 15 stores an array of direction variables. Initial values of these direction variables may be the initial directions in the initial pattern memory 13. Fig.3 shows an example of an initial ridge direction pattern stored in the initial pattern memory 13.

In ordinary circumstances, because of the difficulty to obtain an accurate and reliable fingerprint image in the image memory 11, the initial ridge direction pattern as shown in Fig.3 is not sufficiently trustworthy and must be smoothed.

In this invention, the smoothing of the ridge direction pattern is processed along a line on which the energy function E is decreased. Direction variable revision means 16 changes direction variables in the variable direction memory 15, and judgement means 17 calculates the energy function E for the revised variables, and when the decrement $\Delta E$ of the energy function is below a predetermined level, the revision of direction variables is terminated and the contents of the variable direction memory 15 are taken out as a smoothed ridge direction pattern. Fig.4 shows an example of a smoothed ridge direction pattern obtained from the original pattern shown by Fig. 3.

Figs. 5 show an effect of R(m,n) to a smoothing process of this invention. Three subregions (m-1, n), (m, n), (m+1, n) are shown. In Fig. 5(a) and Fig. 5(b), it is assumed that an increase in $E_1$ is outweighed by a decrease in $E_2$, and the smoothed pattern as shown decreases the energy function E. In Fig.5(b), it is assumed that R(m-1, n)>R(m, n)and R(m+1, n)>R(m, n) and small changes in directions of the subregions (m-1,n) and (m+1,n) with a large change in direction of the subregion (m,n) made the increase in $E_1$ to a minimum. When this difference in probability is not considered, the increase in $E_1$ will be minimum when the direction change is equal in these three subregions as shown by Fig. 5(a), in which initial directions of the subregions (m-1,n) and (m+1, n) having higher confidence of estimation are changed by an influence of a direction error of the subregion (m, n).

In an embodiment of this invention, the direction difference $\delta(\theta_2, \theta_1)$ between two directions $\theta_2$ and $\theta_1$ is defined as a square of magnitude of a vector representing a difference vector between two unit vectors having directions $\theta_1$, $\theta_2$ respectively.

Fig.6 illustrates this definition wherein a unit vector having direction $\theta_1$ is denoted by a numeral 61, and another unit vector having direction $\theta_2$ is denoted by a numeral 62. A numeral 63 represents a difference vector of the two unit vectors 61 and 62. A square of the magnitude of 63 is defined as the direction difference $\delta(\theta_2, \theta_1)$. Thus, the direction difference $\delta\{\theta(m,n), \vartheta(m,n)\}$ in equation(2) is represented by $|\exp(i\theta)-\exp(i\vartheta)|^2$•••(6), where $\exp(i\theta)$ represents a unit vector having direction $\theta$. It must be noted that directions in equation (6) are to be measured in $0\sim2\pi$. When these directions are measured in a limited range of $0\sim\pi$, the values of the direction angles must be doubled.

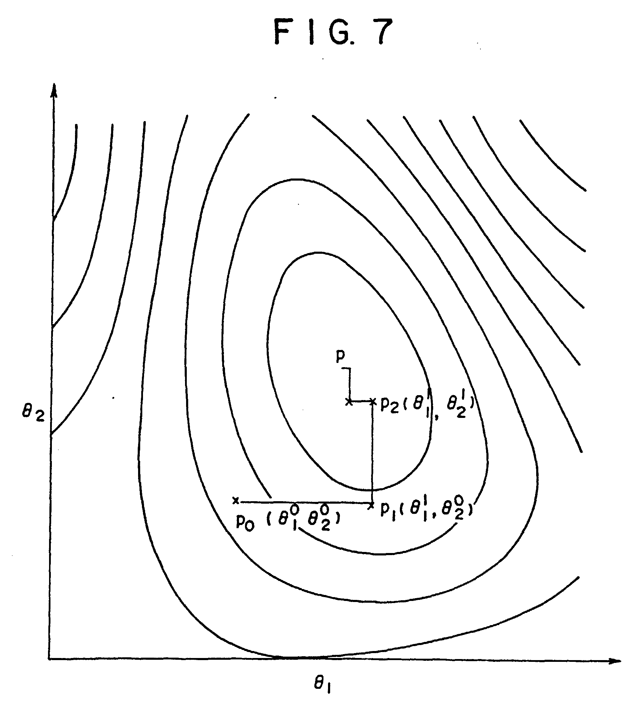

In the direction variable revision means 16, calculation by equations (5) is executed. Fig.7 illustrates an example of revising direction variables for two variables $\theta_1$ and $\theta_2$. Constant energy lines are plotted on a plane of the two variables $\theta_1$ and $\theta_2$. Starting from an initial condition represented by $p_0$, $\theta_1$ is changed in accordance with equations (5) to point $p_1$ keeping $\theta_2$ unchanged. From point $p_1$, $\theta_2$ is changed in accordance with equations(5) to point $p_2$ keeping $\theta_1$ unchanged. Repeating these steps, we can reach to a point p having a minimum energy value.

Actually, there are as many direction variables as the number of subregions, and the revision of direction variables must be executed in a multi-dimensional space along an axis corresponding to each direction variable.

When the equations(5) are solved for equations(2), (3), (4) and (6), we obtain $\theta(m,n)=\arctan(A_y/A_x)$ where $\theta(m,n)$ satisfies $\cos\theta(m, n)=A_y/A$ and

$$A_x \equiv R(m, n)\cos\vartheta(m, n)$$

$$+\lambda \{\cos\theta(m+1, n)+\cos(m, n+1)$$

$$+\cos\theta(m-1, n)+\cos\theta(m, n-1)\}$$

$$A_y \equiv R(m, n)\sin\vartheta(m, n)$$

$$+\lambda \{\sin\theta(m+1, n)+\sin\theta(m, n+1)$$

$$+\sin\theta(m-1, n)+\sin\theta(m, n-1)\}$$

$$A \equiv (A_x^{\ 2} + A_y^{\ 2})^{1/2}$$

Now referring to Fig.2, the present invention comprises a step 20 of ridge direction pattern extraction, an iterative step 28 for revising direction variables, and a judgement step 29. The iterative step 28 for revising direction variables comprises a calculation step 22 of a new value of a direction variable (Nth direction variable) along a line of decreasing the energy function E, with all other direction variables being kept unchanged, a revision step 23 of the direction variable, and an iteration step of repeating these steps 22 and 23 for all the direction variables, which are numbered by N (N= 0, 1, 2, ···· n-1).

The judgement step 29 comprises a calculation step 25 for calculating decrement $\Delta E$ of the energy function E in a cycle of revising all the direction variables, and a comparison step 26 for comparing $\Delta E$ to a predetermined threshold Th.

When $\Delta E<Th$, the iteration of steps 22, 23 and 24 is terminated, and the direction variables are output as a smoothed direction pattern. When $\Delta E \geq Th$, a ridge line pattern renovation step 28 including steps 22, 23 and 24 is repeated.

## Claims

**1.** Method of smoothing a ridge direction pattern comprising:

a step of dividing a ridge line image picture into an array of plural subregions,

a ridge direction pattern extraction step (20) of determining for all the subregions, an initial direction $\vartheta(m, n)$ of ridge line image, an initial probability R (m, n) of said initial direction, and an initial value of a direction variable $\Theta(m, n)$ of a subregion whose position is at mth row and nth column in said array of subregions,

an iterative step (28) for revising said direction variables of all the subregions to smooth a ridge direction pattern formed by said ridge directions of all the subregions, comprising:

a first calculation step (22) of a new value of a direction variable along a line of decreasing an energy function E, as defined in the below energy calculation step, with all other direction variables being kept unchanged;

a revision step (23) for revising said direction variable with said new value;

said method of smoothing a ridge direction pattern further comprising:

a step of calculating said predetermined energy function E after the direction-variable of each region has been revised, comprising:

a second step of calculating, for each subregion, a product of the initial probability R(m, n) of said subregion multiplied by direction difference $\delta\{\Theta(m, n), \vartheta(m, n)\}$ between the direction variable and the initial direction of said subregion,

a first step of integrating said product $R(m, n)\delta\{\Theta(m, n), \vartheta(m, n)\}$ of all the subregions for determining a discrepancy evaluation function $E_1$,

a third step of calculating, for each concerned subregion, a product of weight of influence from a neighbouring subregion multiplied by the direction difference $\delta\{\Theta(m, n),\Theta(m+1, n)\}$ between the direction variables of said concerned and said neighbouring subregion,

a second step of integrating, for each said concerned subregion, said product of weight and the directional difference on all neighbouring subregions for determining a component of a dispersion evaluation function of said concerned subregion,

a third step of integrating said component of dispersion evaluation function on all the subregions for determining a dispersion evaluation function $E_2$,

a fourth step (25) of calculating said energy function E which is represented as a linear function $E=E_1 + \lambda E_2$, of said discrepancy evaluation function $E_1$ and said dispersion evaluation function $E_2$, $\lambda$ being a coefficient;

said method of smoothing a ridge direction pattern further comprising:

a judgement step (29) for deciding termination of said iterative step based on the calculated energy function value.

**2.** Method according to claim 1,

wherein said direction difference $\delta(\theta_2, \theta_1)$ between two directions $\theta_2$ and $\theta_1$ is defined as a square of magnitude of a vector representing a difference vector between two unit vectors having direction $\theta_1$ and $\theta_2$, respectively.

**3.** Method according to claim 1 or 2,

wherein said step of revising said direction variables (28) comprises:
calculation step for determining a new direction variable $\theta_1$ by equations $\partial E/\partial\theta_1=0$, and $\partial^2E/\partial\theta_1{}^2>0$ where $\theta_1$ is the direction variable of an arbitrary subregion,
revision step for substituting said direction variable of said arbitrary subregion by said new directicn variable and
steps of repeating said calculation steps and said revision steps for all other subregions.

**4.** Method according to any of claims 1 to 3, wherein said judgement step (29) for deciding termination of said iterative calculation comprises a step wherein a decrement $\Delta E$ of said energy function E in an iteration of said iterative step is compared to a predetermined threshold value Th, and the iteration of said iterative step is terminated when $\Delta E<Th$.

**5.** An equipment used for smoothing a ridge direction pattern comprising:

an image memory (11) for storing a fingerprint ridge line picture,

ridge direction pattern extraction means (12) for converting the contents of said image memory to directional patterns of all subregions and probabilities of the directional patterns,

ridge direction pattern revision means for revising ridge directions of all the subregions by an iterative calculation to smooth the ridge direction pattern composed of said ridge directions of all the subregions, comprising

an initial pattern memory (13) for storing an initial direction $\vartheta(m, n)$ of a subregion for all the subregions, where (m, n) indicates a subregion at mth row and nth column, a probability pattern memory (14) for storing an initial probability R(m, n) of the initial direction $\vartheta$(m, n) for all the subregions,
a direction variable memory (15) for storing a direction variable $\theta$(m, n) for all the subregions, and
direction variable revision means (16) for revising said direction variables;
and means for storing the revised direction variable in said variable direction memory (15) for next repeated steps;

said means further comprising means for calculating an energy function comprising

means for calculating a discrepancy evaluation function $E_1$ by an equation $E1 = \Sigma\Sigma R(m, n)\ \delta\{(\Theta(m, n), \vartheta(m, n)\}$ where $\delta$ represents the direction difference of the two directions, and $\Sigma\Sigma$ represents an integration on all the subregions,

means for calculating a contribution of a subregion to a dispersion evaluation function by a sum of the products of the direction difference from neighbouring subregions and the weight of influence of the neighbouring subregions, and for integrating the contribution on all the subregions for producing the dispersion evaluation function $E_2$,

means for revising a direction variable along a line of decreasing an energy function E, with all other direction variables being kept unchanged, said energy function being

determined by an equation $E=E_1 + \lambda E_2$, where $\lambda$ is a coefficient,

said equipment further comprising judgement means for deciding the termination of said iterative calculation based on the calculated energy function value.

**6.** An equipment of claim 5, wherein said judment means calculates a decrement $\Delta E$ of said energy function E for each cycle of revision of all the direction variables, compares the decrememt to a predetermined threshold Th, and terminates the revision of the direction variables when $\Delta E < Th$.

**Patentansprüche**

**1.** Verfahren zum Glätten eines Rippenrichtungsmusters, das aufweist:

einen Schritt zum Unterteilen eines Rippenlinienbildes in eine Matrix von mehreren Teilbereichen,
einen Rippenrichtungsmuster-Extraktionsschritt (20), um für alle Teilbereiche eine Anfangsrichtung $\vartheta$(m,n) des Rippenlinienbildes, eine Anfangswahrscheinlichkeit R(m,n) der Anfangsrichtung und einen Anfangswert einer Richtungsvariablen $\theta$(m,n) eines Teilbereichs zu bestimmen, die in der m-ten Zeile und der n-ten Spalte der Teilbereichsmatrix steht,
einen Iterationsschritt (28) zur Änderung der Richtungsvariablen aller Teilbereiche zum Glätten eines durch die Rippenrichtungen aller Teilbereiche ausgebildeten Rippenrichtungsmusters, mit:
einem ersten Berechnungsschritt (22) für einen neuen Wert einer Richtungsvariablen entlang einer Linie mit abnehmender Energiefunktion E, wie in dem untenstehenden Energieberechnungsschritt definiert, wobei alle anderen Richtungsvariablen unverändert gehalten werden;
einem Änderungsschritt (23) zum Ändern der Richtungsvariablen mit dem neuen Wert;
wobei das Verfahren zum Glätten eines Rippenrichtungsmusters ferner aufweist:
einen Schritt zum Berechnen der vorgegebenen Energiefunktion E nach der Änderung der Richtungsvariablen für jeden Bereich, mit:
einem zweiten Schritt, um für jeden Teilbereich ein Produkt aus der Anfangswahrscheinlichkeit R(m,n) des Teilbereichs und der Richtungsdifferenz $\delta\{\theta(m,n),\vartheta(m,n)\}$ zwischen der Richtungsvariablen und der Anfangsrichtung des Teilbereichs zu berechnen,
einem ersten Schritt zur Integration des Produkts $R(m,n)\delta\{\theta(m,n), \vartheta(m,n)\}$ über alle Teilbereiche zur Bestimmung einer Diskrepanzbeurteilungsfunktion $E_1$,
einem dritten Schritt, um für jeden betreffenden Teilbereich ein Produkt aus dem Gewicht des Einflusses von einem benachbarten Teilbereich und der Richtungsdifferenz $\delta\{\theta(m,n), \theta(m+1,n)\}$ zwischen den Richtungsvariablen des betreffenden und des benachbarten Teilbereichs zu berechnen,
einem zweiten Schritt für jeden betreffenden Teilbereich zur Integration des Produkts aus dem Gewicht und der Richtungsdifferenz über alle benachbarten Teilbereiche zur Bestimmung einer Komponente einer Dispersionsbeurteilungsfunktion des betreffenden Teilbereichs,
einem dritten Schritt zur Integration der Komponente der Dispersionsbeurteilungsfunktion über alle Teilbereiche zur Bestimmung einer Dispersionsbeurteilungsfunktion $E_2$,
einem vierten Schritt (25) zur Berechnung der Energiefunktion E, die als lineare Funktion $E = E_1 + \lambda E_2$ der Diskrepanzbeurteilungsfunktion $E_1$ und der Dispersionsbeurteilungsfunktion $E_2$ dargestellt wird, wobei $\lambda$ ein Koeffizient ist;
wobei das Verfahren zum Glätten eines Rippenrichtungsmusters ferner aufweist:
einen Beurteilungsschritt (29) zur Entscheidung über die Beendigung des Iterationsschritts auf der Basis des berechneten Energiefunktionswerts.

**2.** Verfahren nach Anspruch 1,

wobei die Richtungsdifferenz $\delta(\theta_2,\theta_1)$ zwischen zwei Richtungen $\theta_2$ und $\theta_1$ als Betragsquadrat eines Vektors definiert ist, der eine Richtungsdifferenz zwischen zwei Einheitsvektoren mit den Richtungen $\theta_1$ bzw. $\theta_2$ darstellt.

**3.** Verfahren nach Anspruch 1 oder 2,

wobei der Schritt zur Änderung der Richtungsvariablen (28) aufweist:
einen Berechnungsschritt zur Bestimmung einer neuen Richtungsvariablen $\theta_1$ durch Gleichungen $\partial E/\partial\theta_1 = 0$ und $\partial^2 E/\partial\theta_1{}^2 > 0$, wobei $\theta_1$ die Richtungsvariable eines beliebigen Teilbereichs ist,
einen Änderungsschritt zum Ersetzen der Richtungsvariablen des beliebigen Teilbereichs durch die neue Richtungsvariable, und
Schritte zum Wiederholen der Berechnungsschritte und der Anderungsschritte für alle anderen Teilbereiche.

**4.** Verfahren nach einem der Ansprüche 1 bis 3, wobei der Beurteilungsschritt (29) zur Entscheidung über die Beendigung der Iterationsrechnung einen Schritt aufweist, in dem ein Dekrement $\Delta E$ der Energiefunktion E in einer Wiederholung des Iterationsschrittes mit einem vorgegebenen Schwellwert Th verglichen und die Wiederholung des Iterationsschrittes beendet wird, wenn $\Delta E < Th$ ist.

**5.** Einrichtung zum Glätten eines Rippenrichtungsmusters, welche aufweist:

einen Bildspeicher (11) zum Speichern eines Fingerabdruck-Rippenlinienbildes,
eine Rippenrichtungsmuster-Extraktionseinrichtung (12) zum Umwandeln des Bildspeicherinhalts in Richtungsmuster für alle Teilbereiche und in Wahrscheinlichkeiten der Richtungsmuster,
eine Rippenrichtungsmuster-Änderungseinrichtung zum Ändern von Rippenrichtungen aller Teilbereiche durch eine Iterationsrechnung, um das aus den Rippenrichtungen aller Teilbereiche zusammengesetzte Rippenrichtungsmuster zu glätten, mit:
einem Anfangsmusterspeicher (13) zum Speichern einer Anfangsrichtung $\vartheta(m,n)$ eines Teilbereichs für alle Teilbereiche, wobei (m,n) einen Teilbereich in der m-ten Zeile und der n-ten Spalte anzeigt, einem Wahrscheinlichkeitsmusterspeicher (14) zum Speichern einer Anfangswahrscheinlichkeit R(m,n) der Anfangsrichtung $\vartheta$ (m,n) für alle Teilbereiche,
einem Richtungsvariablenspeicher (15) zum Speichern einer Richtungsvariablen $\theta(m,n)$ für alle Teilbereiche, und
einer Richtungsvariablen-Änderungseinrichtung (16) zum Ändern der Richtungsvariablen; und
einer Einrichtung zum Speichern der geänderten Richtungsvariablen im Richtungsvariablenspeicher (15) für die nächsten Wiederholungsschritte;
wobei die Einrichtung ferner eine Einrichtung zur Berechnung einer Energiefunktion mit den folgenden Komponenten aufweist:
einer Einrichtung zum Berechnen einer Diskrepanzbeurteilungsfunktionn $E_1$ durch eine Gleichung $E_1 = \Sigma\Sigma R(m,n)\, \delta\{\theta(m, n), \vartheta(m, n)\}$, wobei $\delta$ die Richtungsdifferenz der beiden Richtungen und $\Sigma\Sigma$ eine Integration über alle Teilbereiche bedeutet,
einer Einrichtung zum Berechnen eines Beitrags eines Teilbereichs zu einer Dispersionsbeurteilungsfunktion durch eine Summe der Produkte aus der Richtungsdifferenz von benachbarten Teilbereichen und dem Gewicht des Einflusses der benachbarten Teilbereiche sowie zur Integration des Beitrags über alle Teilbereiche zum Erzeugen der Dispersionsbeurteilungsfunktion $E_2$,
einer Einrichtung zum Ändern einer Richtungsvariablen entlang einer Linie mit abnehmender Energiefunktion E, wobei alle anderen Richtungsvariablen unverändert gehalten werden, wobei die Energiefunktion durch eine

Gleichung $E = E_1 + \lambda E_2$ bestimmt wird, wobei $\lambda$ ein Koeffizient ist,
wobei die Einrichtung ferner eine Beurteilungseinrichtung zur Entscheidung über die Beendigung der Iterationsrechnung auf der Basis des berechneten Energiefunktionswertes aufweist.

**6.** Einrichtung nach Anspruch 5, wobei die Beurteilungseinrichtung ein Dekrement $\Delta E$ der Energiefunktion E für jeden Änderungszyklus aller Richtungsvariablen berechnet, das Dekrement mit einem vorgegebenen Schwellwert Th vergleicht und die Änderung der Richtungsvariablen beendet, wenn $\Delta E < Th$ ist.

**Revendications**

**1.** Procédé de lissage d'un schéma de directions de crêtes, comprenant :

- une étape de division d'une image de lignes de crêtes en un arrangement de plusieurs sous-régions, - une étape (20) d'extraction de schéma de directions de crêtes, pour déterminer, pour toutes les sous-régions, une direction initiale $\vartheta(m,n)$ d'image de lignes de crêtes, une probabilité initiale R(m,n) de ladite direction initiale, et une valeur initiale d'une variable de direction $\theta(m,n)$ d'une sous-région dont la position est à une m-ième rangée et une n-ième colonne dans ledit arrangement de sous-régions,
- une étape itérative (28) pour réviser lesdites variables de direction de toutes les sous-régions pour lisser un schéma de directions de crêtes formé par lesdites directions de crêtes de toutes les sous-régions, comprenant :

  -- une première étape de calcul (22) d'une nouvelle valeur d'une variable de direction le long d'une ligne de diminution d'une fonction d'énergie E, telle que définie dans l'étape de calcul d'énergie ci-dessous, toutes les autres variables de direction restant inchangées,
  -- une étape de révision (23) pour réviser ladite variable de direction avec ladite nouvelle valeur ;

  ledit procédé de lissage d'un schéma de directions de crêtes comprenant en outre :
- une étape de calcul de ladite fonction d'énergie prédéterminée E après que la variable de direction de chaque région a été révisée, comprenant :

  -- une deuxième étape de calcul, pour chaque sous-région, d'un produit de la probabilité initiale R(m,n) de ladite sous-région multipliée par la différence de direction $\delta\{\theta(m,n), \vartheta(m,n)\}$ entre la variable de direction et la direction initiale de ladite sous-région,
  -- une première étape d'intégration dudit produit $R(m, n)\delta\{\theta(m, n), \vartheta(m, n)\}$ de toutes les sous-régions, pour déterminer une fonction d'évaluation de divergence $E_1$,
  -- une troisième étape de calcul, pour chaque sous-région concernée, d'un produit du poids de l'influence d'une sous-région voisine multiplié par la différence de direction $\delta\{\theta(m, n),\theta(m+1,n)\}$ entre les variables de direction de ladite sous-région concernée et de ladite sous-région voisine,
  -- une deuxième étape d'intégration, pour chaque dite sous-région concernée, dudit produit du poids et de la différence de direction sur toutes les sous-régions voisines, pour déterminer une composante d'une fonction d'évaluation de dispersion de ladite sous-région concernée,
  -- une troisième étape d'intégration de ladite composante de la fonction d'évaluation de dispersion sur toutes les sous-régions, pour déterminer une fonction d'évaluation de dispersion $E_2$,
  -- une quatrième étape (25) de calcul de ladite fonction d'énergie E qui est représentée comme une fonction linéaire $E = E_1 + \lambda E_2$ de ladite fonction d'évaluation de divergence $E_1$ et de ladite fonction d'évaluation de dispersion $E_2$, $\lambda$ étant un coefficient ;

  ledit procédé de lissage d'un schéma de directions de crêtes comprenant en outre :
- une étape de jugement (29) pour décider de la terminaison de ladite étape itérative en se basant sur la valeur calculée de la fonction d'énergie.

**2.** Procédé selon la revendication 1, dans lequel ladite différence de direction $\delta(\theta_2,\theta_1)$ entre deux directions $\theta_2$ et $\theta_1$ est définie comme un carré du module d'un vecteur représentant un vecteur de différence entre deux vecteurs unitaires ayant la direction $\theta_1$ et $\theta_2$, respectivement.

**3.** Procédé selon la revendication 1 ou 2, dans lequel ladite étape (28) de révision desdites variables de direction comprend :

- une étape de calcul pour déterminer une nouvelle variable de direction $\theta_1$ par des équations :

$$\partial E/\partial \theta_1 = 0 \text{ et } \partial^2 E/\partial \theta_1^{\,2} > 0,$$

où $\theta_1$ est la variable de direction d'une sous-région arbitraire,
- une étape de révision pour remplacer ladite variable de direction de ladite sous-région arbitraire par ladite nouvelle variable de direction, et
- des étapes de répétition desdites étapes de calcul et desdites étapes de révision pour toutes les autres sous-régions.

**4.** Procédé selon l'une quelconque des revendications 1 à 3, dans lequel ladite étape de jugement (29) pour décider de la terminaison dudit calcul itératif comprend une étape dans laquelle un décrément $\Delta E$ de ladite fonction d'énergie E dans une itération de ladite étape itérative est comparé à une valeur de seuil prédéterminée Th, et l'itération de ladite étape itérative est terminée lorsque $\Delta E < Th$.

**5.** Dispositif utilisé pour lisser un schéma de directions de crêtes, comprenant :

- une mémoire d'image (11) pour stocker un dessin de lignes de crêtes d'une empreinte digitale,
- des moyens (12) d'extraction de schémas de directions de crêtes, pour convertir le contenu de ladite mémoire d'image en schémas de directions de toutes les sous-régions et en probabilités des schémas de directions,
- des moyens de révision de schémas de directions de crêtes, pour réviser des directions de crêtes de toutes les sous-régions par un calcul itératif pour lisser le schéma de directions de crêtes composé desdites directions de crêtes de toutes les sous-régions, comprenant :

  -- une mémoire de schéma initial (13) pour stocker une direction initiale $\vartheta(m,n)$ d'une sous-région pour toutes les sous-régions, où (m,n) indique une sous-région à une m-ième rangée et une n-ième colonne,
  -- une mémoire de schéma de probabilité (14) pour stocker une probabilité initiale R(m,n) de la direction initiale $\vartheta(m,n)$ pour toutes les sous-régions,
  -- une mémoire de variable de direction (15) pour stocker une variable de direction $\theta(m,n)$ pour toutes les sous-régions,
  -- des moyens (16) de révision de variables de direction pour réviser lesdites variables de direction, et
  -- des moyens pour stocker la variable de direction révisée dans ladite mémoire de variables de direction (15) pour des étapes répétées suivantes ;

lesdits moyens comprenant en outre des moyens pour calculer une fonction d'énergie, comprenant :

  -- des moyens pour calculer une fonction d'évaluation de divergence $E_1$ par une équation

$$E_1 = \Sigma\Sigma R(m,n)\delta\{\theta(m,n),\ \vartheta(m,n)\}$$

où $\delta$ représente la différence de direction des deux directions et $\Sigma\Sigma$ représente une intégration sur toutes les sous-régions,
  -- des moyens pour calculer une contribution d'une sous-région à une fonction d'évaluation de dispersion par une somme des produits de la différence de direction par rapport à des sous-régions voisines et du poids de l'influence des sous-régions voisines, et pour intégrer la contribution sur toutes les sous-régions pour produire la fonction d'évaluation de dispersion $E_2$,
  -- des moyens pour réviser une variable de direction le long d'une ligne de diminution d'une fonction d'énergie E, toutes les autres variables de direction restant inchangées, ladite fonction d'énergie étant déterminée par une équation :

$$E = E_1 + \lambda E_2,$$

où $\lambda$ est un coefficient;

ledit dispositif comprenant en outre des moyens de jugement pour décider de la terminaison dudit calcul itératif en se basant sur la valeur calculée de la fonction d'énergie.

**6.** Dispositif selon la revendication 5, dans lequel lesdits moyens de jugement calculent un décrément $\Delta E$ de ladite fonction d'énergie E pour chaque cycle de révision de toutes les variables de direction, comparent le décrément à un seuil prédéterminé Th, et termine la révision des variables de direction lorsque $\Delta E$ < Th.

FIG. 1

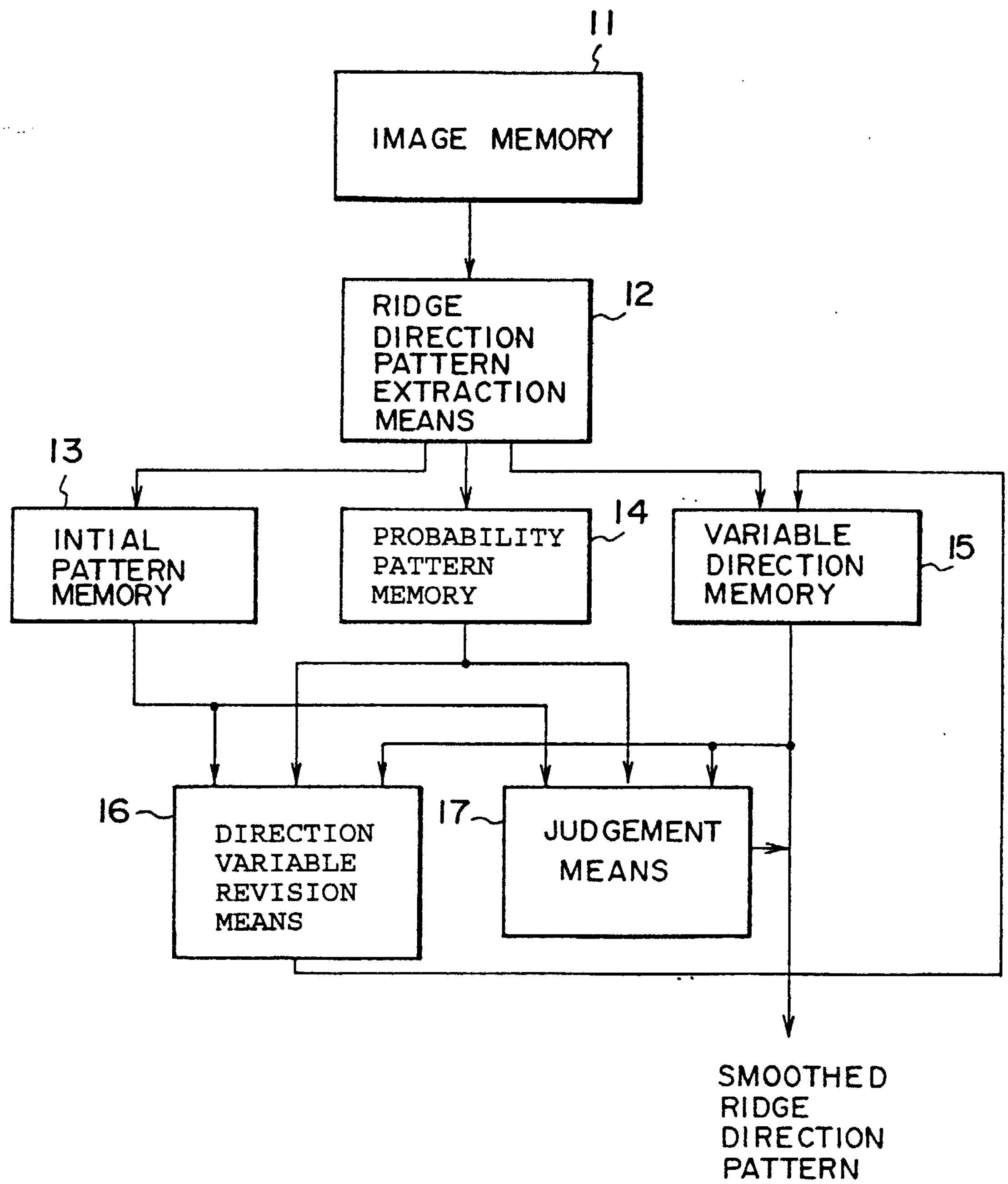
11
IMAGE MEMORY
12
RIDGE DIRECTION PATTERN EXTRACTION MEANS
13
INTIAL PATTERN MEMORY
14
PROBABILITY PATTERN MEMORY
15
VARIABLE DIRECTION MEMORY
16
DIRECTION VARIABLE REVISION MEANS
17
JUDGEMENT MEANS
SMOOTHED RIDGE DIRECTION PATTERN

FIG. 2

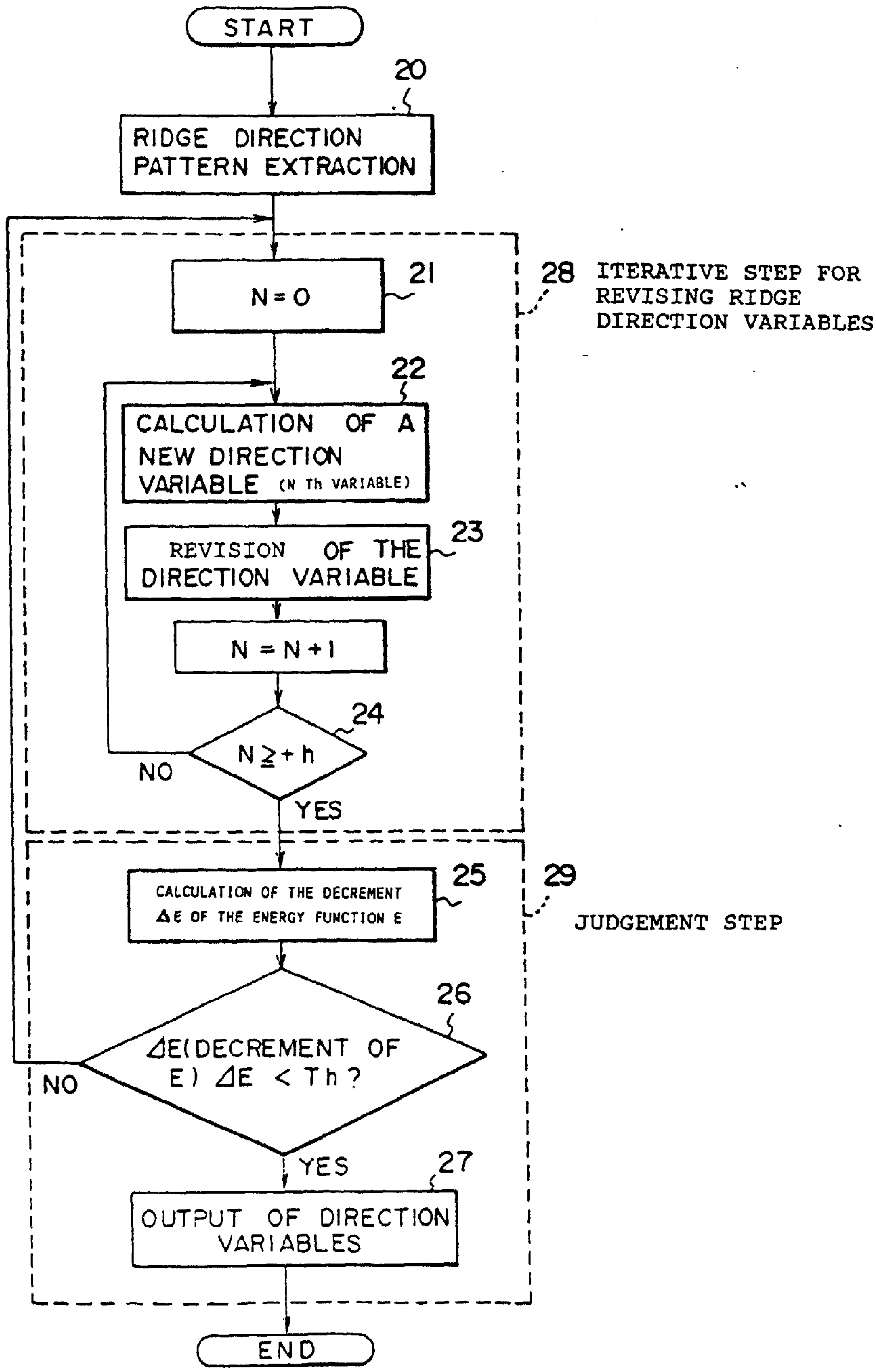
START
20
RIDGE DIRECTION PATTERN EXTRACTION
21
N = 0
22
CALCULATION OF A NEW DIRECTION VARIABLE (N Th VARIABLE)
23
REVISION OF THE DIRECTION VARIABLE
N = N + 1
24
N ≧ + h
NO
YES
28 ITERATIVE STEP FOR REVISING RIDGE DIRECTION VARIABLES
25
CALCULATION OF THE DECREMENT ΔE OF THE ENERGY FUNCTION E
29
JUDGEMENT STEP
26
ΔE(DECREMENT OF E) ΔE < Th ?
NO
YES
27
OUTPUT OF DIRECTION VARIABLES
END

FIG. 3

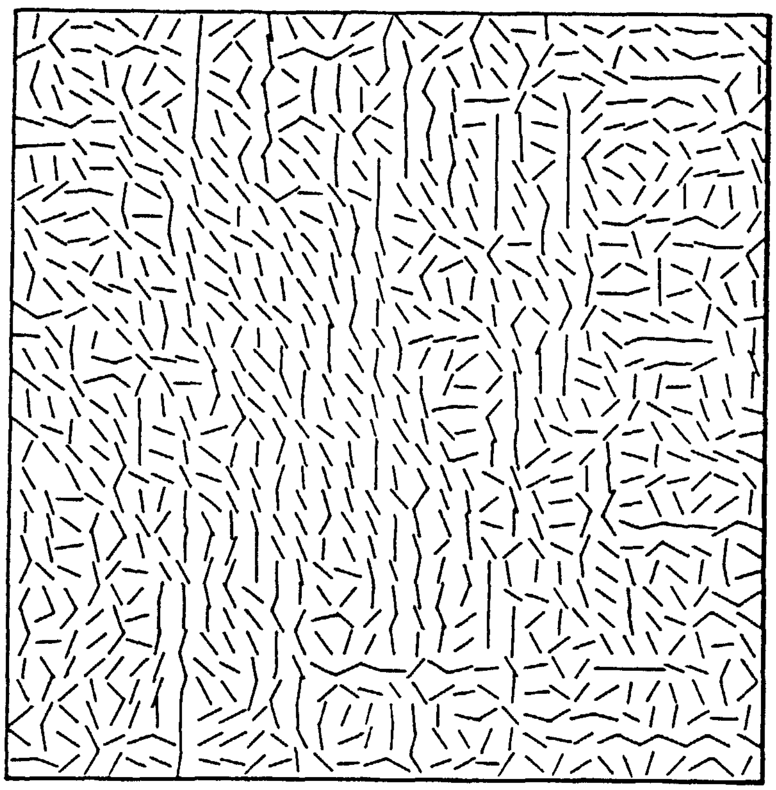

FIG. 4

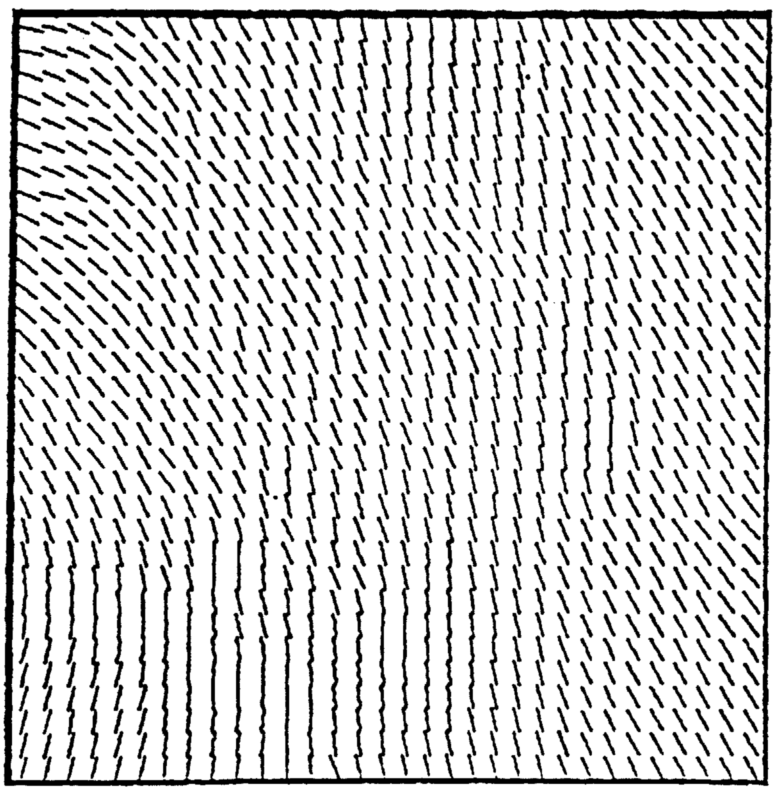

FIG. 5

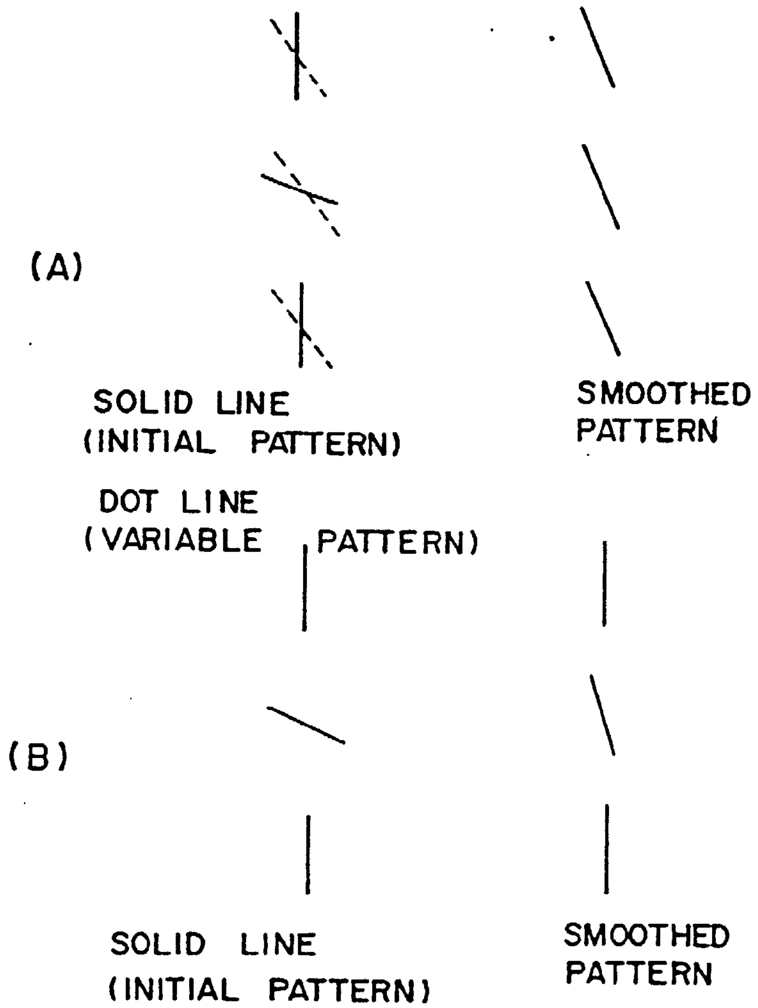
(A)
SOLID LINE
(INITIAL PATTERN)
DOT LINE
(VARIABLE PATTERN)
SMOOTHED
PATTERN
(B)
SOLID LINE
(INITIAL PATTERN)
SMOOTHED
PATTERN

FIG. 6

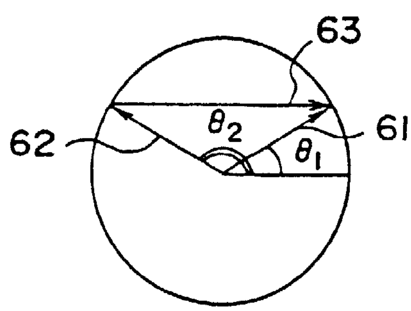
63
62
61
$\theta_2$
$\theta_1$

FIG. 7